# EUROPÄISCHE PATENTSCHRIFT

(11) **EP 1 332 896 B1**
(45) Veröffentlichungstag und Bekanntmachung des Hinweises auf die Patenterteilung: **30.11.2005**
(21) Anmeldenummer: 02002217.4
(22) Anmeldetag: 30.01.2002
(51) Int. Cl.: B60F 3/00

(54) **Amphibisches Brücken- und Übersetzfahrzeug**
Amphibious bridge and crossing vehicle
Véhicule amphibie de franchissement, formant un pont

(43) Veröffentlichungstag der Anmeldung: 06.08.2003
(73) Patentinhaber: General Dynamics Santa Barbara Sistemas GmbH, 67655 Kaiserslautern (DE)
(72) Erfinder: Eberl, Klaus, 66887 St. Julian (DE)
(74) Vertreter: Patentanwälte Möll und Bitterich

(56) Entgegenhaltungen:
- DE-A- 3 204 473
- DE-B- 1 106 357
- DE-B- 1 124 383
- US-A- 3 661 114
- US-A- 3 682 126

## Beschreibung

Die Erfindung betrifft amphibische Brücken- und Übersetzfahrzeuge gemäß dem Oberbegriff des Anspruchs 1.

Amphibische Brücken- und Übersetzfahrzeuge sind bekannt aus den deutschen Auslegeschriften 11 24 383, 19 49 206, 33 42 087 oder auch 33 42 088. Sie bestehen im wesentlichen aus einem Hauptschwimmkörper, der alle für die Fortbewegung zu Land und zu Wasser erforderlichen Komponenten enthält, und zwei Seitenschwimmkörper. Während der Fortbewegung auf dem Land sind die Seitenschwimmkörper nach innen auf den Hauptschwimmkörper geklappt, um ein schmales Straßenprofil zu erreichen. Das Fahrzeug kann mit eingeklappten Seitenschwimmkörpern auch ins Wasser einfahren und sich darin fortbewegen.

Soll das amphibische Fahrzeug als Brücke oder Fähre eingesetzt werden, werden die Seitenschwimmkörper hydraulisch um 180° nach außen geklappt, wodurch eine stabile Schwimmlage und eine große Tragkraft erreicht werden, so dass auch hohe Gewichte getragen werden können.

Zusätzlich zu Hauptschwimmkörper und Seitenschwimmkörpern sind die vorstehend genannten Amphibienfahrzeuge mit Rampen ausgerüstet, die eine bequeme und sichere Verbindung vom Ufer zum Amphibienfahrzeug und von einem Amphibienfahrzeug zu einem benachbarten Amphibienfahrzeug herzustellen ermöglichen. Diese Rampen sind bei Nichtgebrauch neben- und übereinander auf den eingeklappten Seitenschwimmkörpern oder in passenden Aussparungen zwischen Hauptschwimmkörper und eingeklappten Seitenschwimmkörpern untergebracht. Um die Rampen aus ihrer Transportlage in Längsrichtung des Amphibienfahrzeugs in ihre Gebrauchslage quer dazu zu bringen, sind auf dem Hauptschwimmkörper geeignete Hilfsvorrichtungen, beispielsweise ein Bordkran, vorgesehen. Zum Umsetzen der Rampen und zur Bedienung des Bordkrans sind mehrere Bedienungspersonen erforderlich. Diese müssen auf dem Deck des Amphibienfahrzeugs arbeiten, wo sie völlig ungeschützt sind. Das ist unbefriedigend.

Aus der gattungsbildenden (US-3,682,126 ist ein amphibisches Brücken- und Übersetzfahrzeug bekannt mit einem selbst fahrenden Hauptschwimmkörper, an dem zwei Seitenschwimmkörper ausklappbar angelenkt sind. An jedem Seitenschwimmkörper sind seitlich ausklappbare, hydraulisch heb- und senkbare Faltrampen angelenkt. Die Decks von Hauptschwimmkörper und Seitenschwimmkörpern bilden zusammen mit den ausgeklappten Faltrampen eine durchgehende Fahrbahn. Jede Faltrampe besteht aus einer Rampenbasis und einer Rampenspitze. Die Rampenspitze kann unter die Rampenbasis geklappt werden. Die Rampenbasis hat dafür eine entsprechende Aussparung.

Zur weiteren Verkürzung der Fahrbahnlänge können die gefalteten Faltrampen unter die Seitenschwimmkörper und den Hauptschwimmkörper geklappt werden. In diesem Zustand erzeugt das Fahrzeug einen erheblichen Wasserwiderstand. Werden mehrere derartig gefaltete Fahrzeuge zu einer Brücke oder Fähre gekoppelt, ist die Manövrierfähigkeit deutlich eingeschränkt.

Ein weiterer Nachteil der bekannten Lösungen ist, dass die einzelnen Rampenelemente relativ schmal sind, und zwar weniger als die halbe Breite des Hauptschwimmkörpers. Dies bedeutet, dass auf jeder Seite des amphibischen Fahrzeugs zwei gegenseitig beabstandete Rampenelemente nötig sind, wenn eine Fahrbahn für schwere Fahrzeuge wie LKWs oder Panzer benötigt wird. Soll aus Sicherheitsgründen die Lücke zwischen den beiden Rampen geschlossen werden, müssen zusätzliche Fahrbahntafeln eingesetzt werden, die ebenfalls lose auf dem Amphibienfahrzeug mitzuführen sind.

Zunächst waren die Rampen starr. Dadurch war ihre Länge begrenzt durch die Länge des amphibischen Fahrzeugs. Später wurden sogenannte Faltrampen verwendet. Diese werden während des Nichtgebrauchs im zusammengeklappten Zustand auf dem Amphibienfahrzeug gelagert. Im Gebrauchszustand können sie auf fast die doppelte Länge des Amphibienfahrzeugs aufgefaltet werden. Derartige Faltrampen zeigen die DE-Auslegeschriften 19 49 206, 33 42 087 und 33 42 088. Die in der DE-Auslegeschrift 19 49 206 beschriebene Konstruktion hat darüber hinaus den Vorteil, dass zum Umsetzen der Faltrampen aus der Transportstellung in die Gebrauchsstellung kein Bordkran benötigt wird, weil die Faltrampen an einem auf dem Deck des Hauptschwimmkörpers errichteten und um eine senkrechte Achse drehbaren Mittelteil angelenkt sind. Die Faltrampen bestehen aus einer Rampenbasis, die an dem drehbaren Mittelteil angelenkt und mittels Hydraulikzylinder heb- und senkbar sind, und einer Rampenspitze, die an dem freien Ende der Rampenbasis angelenkt und ebenfalls mit Hydraulikzylindern um 180° geschwenkt werden kann. Dabei ist das Scharnier zwischen Rampenbasis und Rampenspitze so gewählt, dass die Rampenspitzen sich in Transportstellung gegen die Unterseite der Rampenbasen anlegen.

Schließlich ist noch ein amphibisches Brücken- und Übersetzfahrzeug im Einsatz, bei dem die Faltrampen am Bug und Heck des selbstfahrenden Hauptschwimmkörpers angelenkt sind. Zur Erhöhung der Tragfähigkeit sind die Rampenbasen zusätzlich mit eigenen Schwimmkörpern ausgerüstet. Vorteilhaft an diesem Fahrzeug ist seine große Länge, gebildet durch die Länge der beiden Faltrampen und die Länge des Hauptschwimmkörpers, und seine hohe Tragfähigkeit. Problematisch ist jedoch, dass der Hauptschwimmkörper auch eine große Breite besitzen muss, bedingt durch die Fahrbahnbreite für die oben erwähnten großen und schweren Fahrzeuge. Ein solch breites Profil behindert jedoch ein schnelles Fortkommen zu Land und zu Wasser. Auch hat das Bedienungspersonal bei ausgefalteten Rampen aus dem Führerhaus heraus praktisch keine Sicht mehr.

Der vorliegenden Erfindung liegt die Aufgabe zugrunde, ein amphibisches Brücken- und Übersetzfahrzeug anzugeben, welches ein schmales Transportprofil mit einer großen Brückenlänge und hoher Tragfähigkeit verbindet.

Diese Aufgabe wird gelöst durch ein Fahrzeug mit den Merkmalen des Anspruchs 1.

Auch die vorliegende Erfindung verwendet Faltrampen, die jedoch an den äußeren Längsseiten der ausgeklappten Seitenschwimmkörper angelenkt sind. Gleichzeitig dienen die Decks des Hauptschwimmkörpers und der Seitenschwimmkörper als Fahrbahn, wodurch sich die Brückenlänge bei ausgeklappten Faltrampen entsprechend verlängert. Außerdem steht fast die volle Länge des Hauptschwimmkörpers als Fahrbahnbreite zur Verfügung, so dass die Fahrbahn auch von problematischen Lasten unter problematischen Bedingungen sicher befahren werden kann. Wird das amphibische Fahrzeug als Fähre eingesetzt, so steht eine große Grundfläche für den Transport zur Verfügung.

Weitere Vorteile der Erfindung sind damit verbunden, dass die Rampenspitzen nicht wie beim Stand der Technik gegen die Unterseite der Rampenbasen, sondern gegen deren Oberseite geklappt werden. Dadurch bleibt auch bei eingefalteter Faltrampe der volle Rampenverstellweg nach unten erhalten und die Überlastsicherung durch die Druckbegrenzungsventile an den Rampenzylindern bleibt wirksam.

Da beim erfindungsgemäßen Fahrzeug die Faltrampen im Transportzustand quer zur Fahrzeuglängsrichtung auf dem Hauptschwimmkörper liegen, müssen sich vor dem Ausfalten nicht mehr gedreht werden. Es müssen auch keine losen Teile mehr gehandhabt werden. Dadurch ist es möglich, sämtliche Falt- und Entfaltvorgänge vom Fahrzeuginneren aus zu steuern, gegebenenfalls mit Computerhilfe. Das Bedienungspersonal muss den geschützten Fahrzeugbereich nicht mehr verlassen.

Weiterbildungen und Ausgestaltungen der Erfindung sind Gegenstand der Unteransprüche.

Gemäß einer ersten Weiterbildung der Erfindung besitzen die Faltrampen einen keilförmigen Querschnitt, wobei das Deck der Seitenschwimmkörper komplementär dazu abgeschrägt ist. Dadurch lassen sich die Faltrampen ohne Lücke oder Spalt auf die Seitenschwimmkörper legen. Dank der Keilform ergibt sich dadurch eine ebene Fahrbahn.

Wie oben erwähnt erfolgen alle Schwenkvorgänge über eingebaute Hydraulikzylinder. In besonderen Fällen kann es jedoch von Vorteil sein, wenn bestimmte Elemente starr gekoppelt sind. Diesbezüglich kommen im wesentlichen in Betracht die Scharniere zwischen Seitenschwimmkörper und Rampenbasis oder zwischen Hauptschwimmkörper und Seitenschwimmkörpern. Für diese Fälle können starre Kuppellaschen angebracht werden.

Insbesondere im Bereich zwischen Hauptschwimmkörper und Seitenschwimmkörpern haben sich mehrstufige, insbesondere dreistufige Kuppellaschen als vorteilhaft herausgestellt. Dadurch kann der Rampenverstellweg bei maximal befahrbarer Rampenneigung erheblich vergrößert werden.

Es versteht sich, dass zwischen Rampenbasis und Rampenspitze lösbare Scharnierkupplungen vorgesehen werden müssen, um eine biegesteife Verbindung der beiden Elemente zu erreichen. Diese Scharnierkupplungen bieten jedoch auch die Möglichkeit, die gefalteten Rampen zweier benachbarter Amphibienfahrzeuge miteinander zu kuppeln, um auf diese Weise eine doppelt breite Fähre oder auch eine entsprechend lange Brücke zu bilden.

Anhand der Zeichnung soll die Erfindung in Form von Ausführungsbeispielen näher erläutert werden. Es zeigen jeweils rein schematisch
- Fig. 1: ein amphibisches Brücken- und Übersetzfahrzeug in der Landfahrstellung als Seitenansicht,
- Fig. 2: einen Querschnitt entlang der Linie II-II durch das Amphibienfahrzeug der Fig. 1,
- Fig. 3: das Fahrzeug der Fig. 2 mit ausgeklappten Seitenschwimmkörpern,
- Fig. 4: das Fahrzeug der Fig. 3 mit verschieden weit ausgeklappten Faltrampen,
- Fig. 5: eine Fähre, gebildet aus zwei kurz gekoppelten Amphibienfahrzeugen,
- Fig. 6: das Fahrzeug der Fig. 3 in einer weiteren Betriebsstellung,
- Fig. 7: eine Fähre, gebildet aus zwei Amphibienfahrzeugen in der Betriebsstellung nach Fig. 6,
- Fig. 8: das Amphibienfahrzeug der Fig. 4 in einer ersten Ausgestaltung einer Uferrampe und
- Fig. 9: das Fahrzeug der Fig. 4 in einer zweiten Ausgestaltung der Uferrampe.

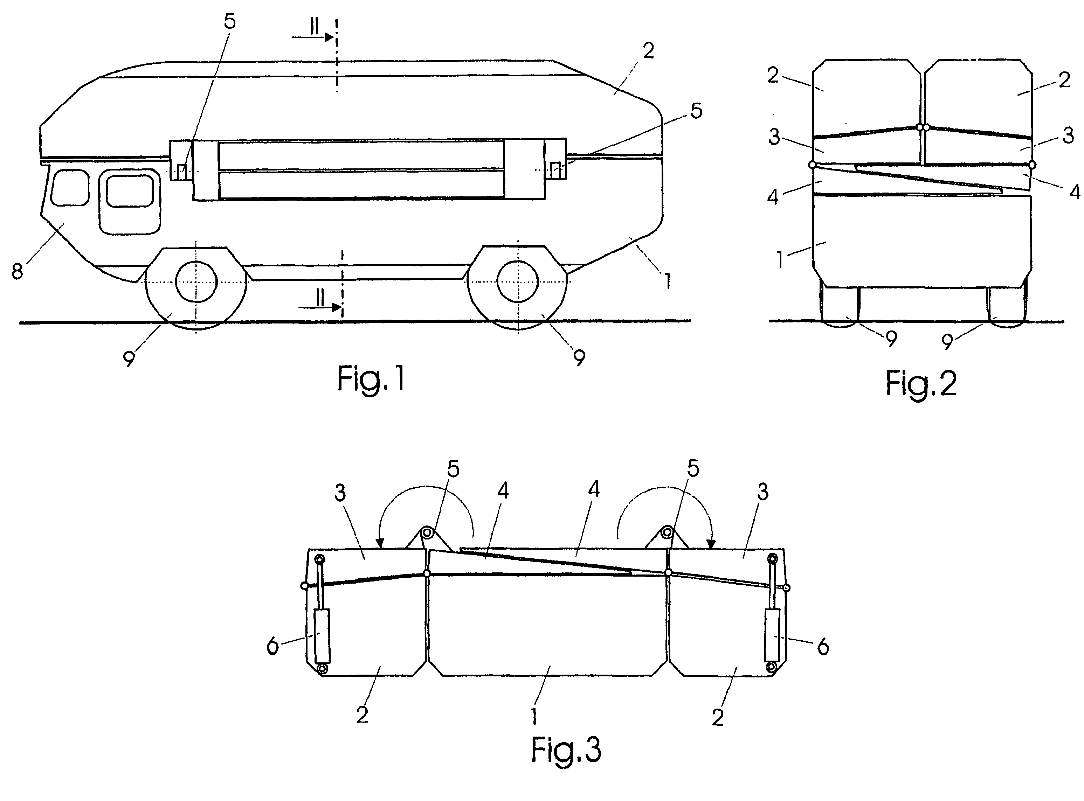

Fig.1 als Seitenansicht und Fig. 2 als Querschnitt entlang der Linie II-II in Fig. 1 zeigen ein amphibisches Brücken- und Übersetzfahrzeug in der Landfahrstellung. Das Fahrzeug besitzt einen selbstfahrenden Hauptschwimmkörper 1 mit einem Führerhaus 8 und einem Fahrwerk 9. An dem Hauptschwimmkörper 1 sind mit Hilfe von Scharnieren 5 zwei Seitenschwimmkörper 2 angelenkt. Zwischen Hauptschwimmkörper 1 und Seitenschwimmkörpern 2 ist eine Aussparung gebildet, in der zwei Faltrampen 3, 4 untergebracht sind. Diese Faltrampen bestehen aus einer Rampenbasis 3 und einer Rampenspitze 4. Die Faltrampen 3, 4 sind an der äußeren Längskante der Seitenschwimmkörper 2 angelenkt und besitzen einen keilförmigen Querschnitt. Das Deck der Seitenschwimmkörper 2 ist komplementär dazu abgeschrägt. Dadurch passen alle Teile 1, 2, 3, 4 in der in den Fig. 1 und 2 gezeigten Transportstellung ohne Lücke und Abstand zusammen. Die Breite der Faltrampen 3, 4 entspricht zu einem wesentlichen Teil der Länge des Hauptschwimmkörpers 1.

Fig. 3 zeigt das Fahrzeug der Fig. 2 mit ausgeklappten Seitenschwimmkörpern 2. Die Räder 9 für den Landtransport sind der Einfachheit halber nicht gezeichnet. Beide Faltrampen 3, 4 liegen flach auf den Decks des Hauptschwimmkörpers 1 und der Seitenschwimmkörper 2. Aufgrund der Keilform der Rampen 3, 4 einerseits und der komplementär abgeschrägten Decks der Seitenschwimmkörper 2 bilden die Unterseiten der Faltrampen 3, 4 eine im wesentlichen ebene Fahrbahn. Es versteht sich, dass zu diesem Zweck nicht nur die Oberseiten der Faltrampen 3, 4 sondern auch deren Unterseiten als Fahrbahn ausgestaltet sind.

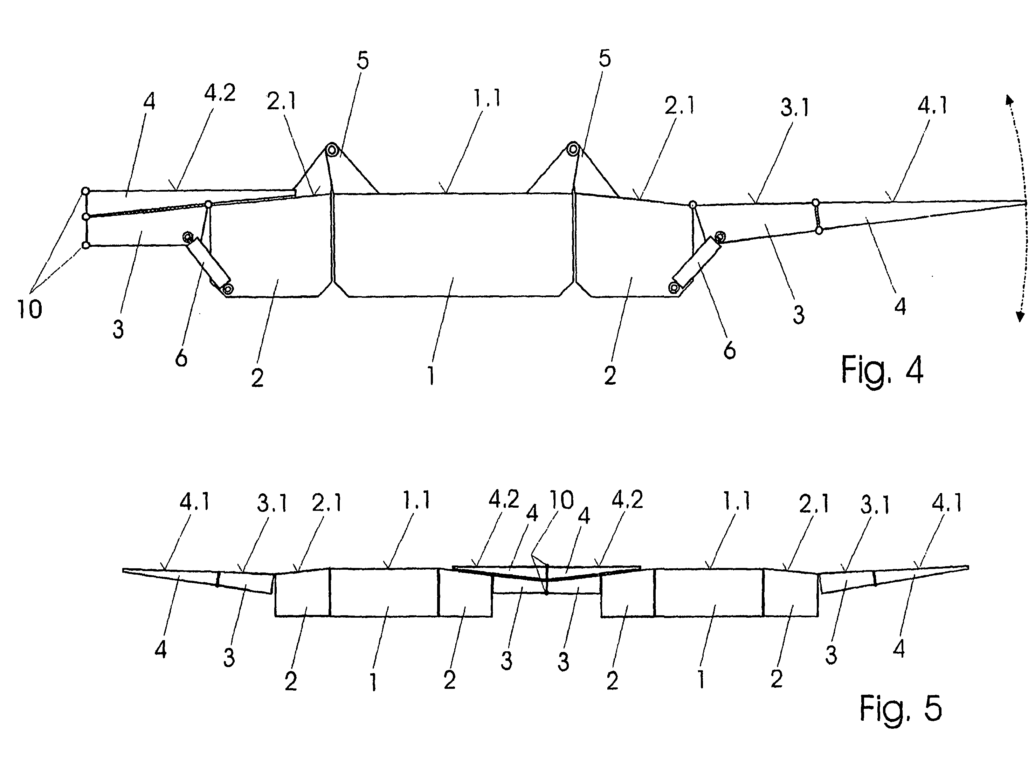

Fig. 4 zeigt als erstes praktisches Ausführungsbeispiel das Fahrzeug der Fig. 3 mit unterschiedlich weit ausgeklappten Faltrampen 3, 4. Auf der rechten Seite ist die Faltrampe 3, 4 gestreckt. Rampenbasis 3 und Rampenspitze 4 sind fest gekoppelt. Hydraulikzylinder 6 zwischen Seitenschwimmkörper 2 und Faltrampe 3, 4 ermöglichen das Heben und Senken der Rampenspitze.

Auf der linken Seite liegt die Rampenspitze 4 flach auf der Rampenbasis 3 und dem Deck 2.1 des Seitenschwimmkörpers 2 auf. Auch hier kann mit Hilfe eines Hydraulikzylinders 6 die Rampe 3, 4 gegenüber dem Seitenschwimmkörper 2 gehoben und gesenkt werden. In dieser Ausgestaltung wird die Fahrbahn gebildet durch die Unterseite 4.2 der linken Rampenspitze 4, die Decks 2.1 der Seitenschwimmkörper 2, das Deck 1.1 des Hauptschwimmkörpers 1 und die Oberseiten 3.1, 4.1 der rechten Faltrampe 3, 4.

Fig. 5 zeigt eine Fähre, gebildet aus zwei amphibischen Fahrzeugen, deren Rampen gemäß Fig. 4 teils eingefaltet, teils ausgefaltet sind. Die beiden Fahrzeuge sind an den eingeklappten Faltrampen miteinander gekoppelt. Die Kopplung wird bewirkt mit Hilfe von Scharnierkupplungen 10, die einerseits an der Rampenbasis 3, andererseits an der Rampenspitze 4 vorgesehen sind.

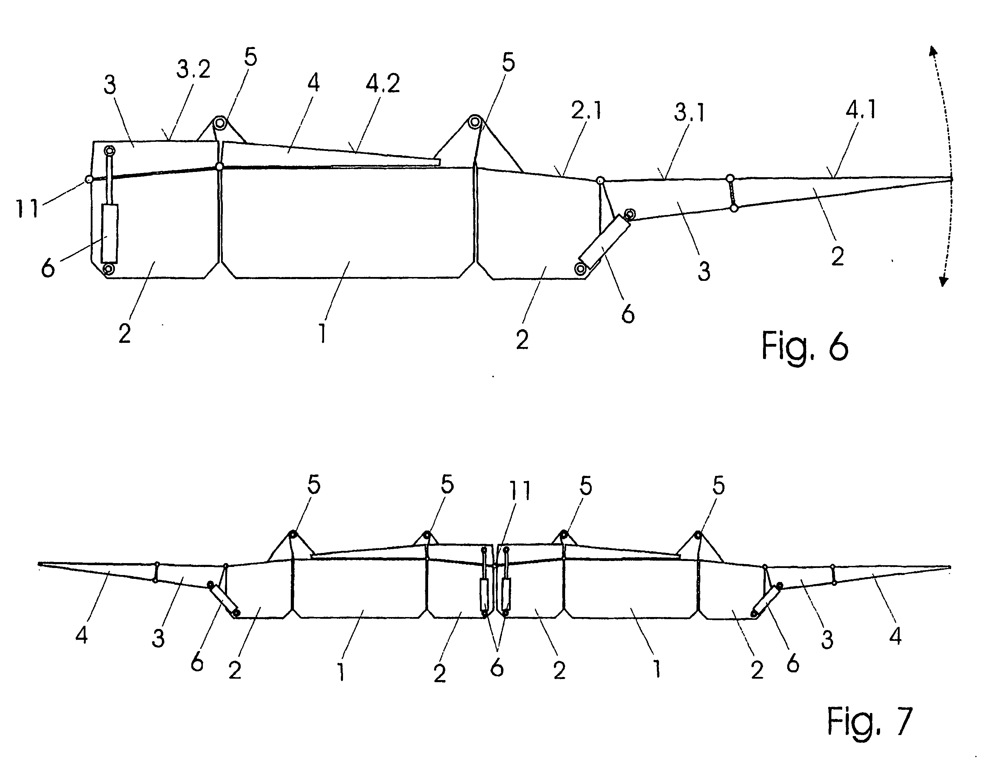

Fig. 6 zeigt eine weitere Betriebsstellung der Faltrampen 3, 4. An der rechten Seite ist die Faltrampe 3, 4 ganz ausgefaltet und kann mittels Hydraulikzylinder 6 gehoben und gesenkt werden. An der linken Seite ist die Faltrampe 3, 4 ebenfalls ausgefaltet, liegt jedoch flach auf dem Seitenschwimmkörper 2 und dem Hauptschwimmkörper 1 auf. In dieser Position wird die Fahrbahn gebildet durch die Unterseiten 3.2, 4.2 der linken Faltrampe 3, 4, das Deck 2.1 des rechten Seitenschwimmkörpers 2 und die Oberseiten 3.1, 4.1 der rechten Faltrampe 3, 4.

Die Fig. 6 lässt erkennen, dass die Länge der Rampenbasen 3 übereinstimmt mit der Breite der Seitenschwimmkörper 2 und dass die Länge der Rampenspitze 4 etwa der Breite des Hauptschwimmkörpers 1 entspricht.

Fig. 7 zeigt eine unter Verwendung von zwei Amphibienfahrzeugen, deren Faltrampen wie in Fig. 6 positioniert sind, zusammengesetzte Fähre. Die Verbindung der beiden Fahrzeuge erfolgt im Bereich der Seitenschwimmkörper 2, die zu diesem Zweck geeignete Kuppelaugen 11 besitzen.

Wie aus den bisher dargestellten Ausführungsformen erkennbar ist, erfolgt das Verschwenken der Seitenschwimmkörper 2 gegenüber dem Hauptschwimmkörper 1 mit Hilfe von Hydraulikzylindern 7 und das Verschwenken der Faltrampen 3, 4 gegenüber den Seitenschwimmkörpern 2 mit Hilfe der Hydraulikzylinder 6. Es hat sich jedoch gezeigt, dass in bestimmten Anwendungsfällen eine starre Verbindung vorteilhaft sein kann. Dies gilt insbesondere dann, wenn eine der Faltrampen 3, 4 als Uferrampe eingesetzt wird.

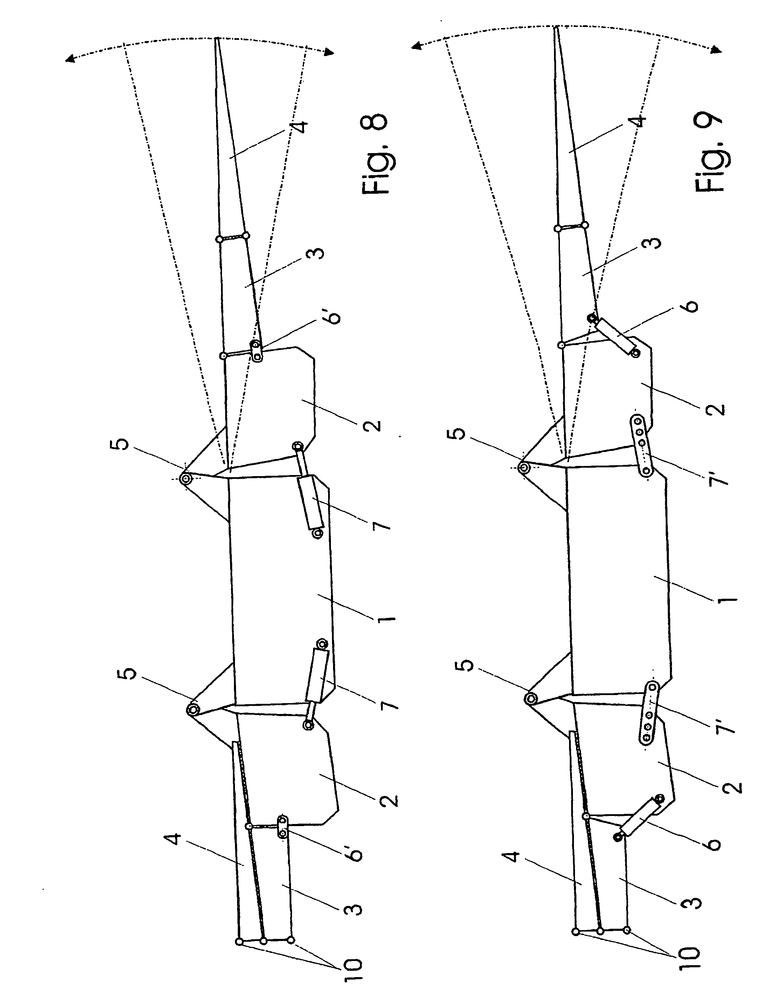

Fig. 8 zeigt nun ein erstes Ausführungsbeispiel mit einer starren Verbindung zwischen Seitenschwimmkörpern 2 und Faltrampen 3, 4. Zwischen den beiden Teilen ist eine starre Kuppellasche 6' vorgesehen. Diese kann die Hydraulikzylinder 6 entweder ersetzen oder aber starr überbrücken.

Fig. 9 zeigt als zweites Ausführungsbeispiel eine starre Verbindung zwischen Hauptschwimmkörper 1 und den Seitenschwimmkörpern 2. Auch hier ist eine starre Kuppellasche 7' vorgesehen, die die Hydraulikzylinder 7 entweder ersetzt oder starr überbrückt. Die Kuppellaschen 7' sind dreistufig ausgebildet, wodurch der Winkel zwischen Hauptschwimmkörper 1 und Seitenschwimmkörper 2 in drei Stufen starr eingestellt werden kann. Die Feineinstellung der freien Rampenspitze erfolgt wieder mit Hilfe der Hydraulikzylinder 6.

## Patentansprüche

1. Amphibisches Brücken- und Übersetzfahrzeug, im wesentlichen umfassend
- einen selbst fahrenden Hauptschwimmkörper (1),
- zwei ausklappbare Seitenschwimmkörper (2)
- und zwei seitlich ausklappbare, hydraulisch heb- und senkbare Faltrampen (3, 4), gebildet aus je einer Rampenbasis (3) und einer Rampenspitze (4),
wobei die Decks (1.1, 2.1) von Hauptschwimmkörper (1) und Seitenschwimmkörpern (2) zusammen mit den ausgeklappten Faltrampen (3, 4) eine durchgehende Fahrbahn bilden und
- die Faltrampen (3, 4) an den Seitenschwimmkörpern (2) angelenkt sind,
**gekennzeichnet durch** die Merkmale:
- die Rampenspitze (4) liegt bei ausgeklappter Rampenbasis (3) und eingeklappter Rampenspitze (4) auf der Oberseite der Rampenbasis (3) auf,
- das Deck (1.1) des Hauptschwimmkörpers (1) bildet mit den Unterseiten (4.2) der Rampenspitzen (4) eine durchgehende Fahrbahn.

2. Fahrzeug nach Anspruch 1, **gekennzeichnet durch** die Merkmale:
- die Faltrampen (3, 4) besitzen einen keilförmigen Querschnitt,
- das Deck (2.1) der Seitenschwimmkörper (2) ist komplementär dazu abgeschrägt.

3. Fahrzeug nach Anspruch 1 oder 2, **gekennzeichnet durch** das Merkmal:
- zwischen Seitenschwimmkörpern (2) und Rampenbasis (3) befinden sich Hydraulikzylinder (6).

4. Fahrzeug nach Anspruch 1 oder 2, **gekennzeichnet durch** das Merkmal:
- zwischen Seitenschwimmkörpern (2) und Rampenbasis (3) befinden sich starre Kuppellaschen (6').

5. Fahrzeug nach einem der Ansprüche 1 bis 4, **gekennzeichnet durch** die Merkmale:
- zwischen Hauptschwimmkörper (1) und Seitenschwimmkörpern (2) befinden sich Hydraulikzylinder (7).

6. Fahrzeug nach einem der Ansprüche 1 bis 4, **gekennzeichnet durch** das Merkmal:
- zwischen Hauptschwimmkörper (1) und Seitenschwimmkörpern (2) befinden sich starre Kuppellaschen (7').

7. Fahrzeug nach Anspruch 6, **gekennzeichnet durch** das Merkmal:
- die Kuppellaschen (8') besitzen mehrere, vorzugsweise drei Stufen.

8. Fahrzeug nach einem der Ansprüche 1 bis 7, **gekennzeichnet durch** das Merkmal:
- zwischen Rampenbasis (3) und Rampenspitze (4) sind lösbare Scharnierkupplungen (10) angeordnet.

9. Fahrzeug nach einem der Ansprüche 1 bis 8, **gekennzeichnet durch** das Merkmal:
- an der Außenseite der Seitenschwimmkörper (2) sind Kuppelaugen (11) angeordnet.

10. Fahrzeug nach einem der Ansprüche 1 bis 9, **gekennzeichnet durch** das Merkmal:
- an jedem Seitenschwimmkörper (2) ist nur eine einzige Faltrampe (3, 4) vorgesehen.

11. Fahrzeug nach einem der Ansprüche 1 bis 10, **gekennzeichnet durch** das Merkmal :
- die Länge der Rampenbasen (3) stimmt überein mit der Breite der Seitenschwimmkörper (2).

12. Fahrzeug nach einem der Ansprüche 1 bis 11, **gekennzeichnet durch** das Merkmal:
- die Länge der Rampenspitzen (4) entspricht der Breite des Hauptschwimmkörpers (1).

## Claims

1. An amphibious bridge and ferry vehicle, substantially comprising
- a self-propelled main float (1),
- two lateral floats (2) which can be unfolded
- and two folding ramps (3,4) which can be unfolded laterally and which can be raised and lowered hydraulically, each formed by a ramp base (3) and a ramp tip (4),
- wherein the decks (1.1,2.1) of the main float (1) and lateral floats (2) form together with the unfolded folding ramps (3,4) a continuous roadway and the folding ramps (3,4) are articulated to the lateral floats (2),
**characterised by** the features:
- when the ramp base (3) is unfolded and the ramp tip (4) is folded up the ramp tip (4) rests on the upper side of the ramp base (3),
- the deck (1.1) of the main float (1) forms with the undersides (4.2) of the ramp tips (4) a continuous roadway.

2. A vehicle according to Claim 1, **characterised by** the features:
- the folding ramps (3,4) are of wedge-shaped cross-section,
- the deck (2.1) of the lateral floats (2) is sloped complementarily thereto.

3. A vehicle according to Claim 1 or 2, **characterised by** the feature:
- hydraulic cylinders (6) are situated between the lateral floats (2) and the ramp base (3).

4. A vehicle according to Claim 1 or 2, **characterised by** the feature:
- rigid coupling straps (6') are situated between the lateral floats (2) and the ramp base (3).

5. A vehicle according to any one of Claims 1 to 4,
**characterised by** the features [sic] :
- hydraulic cylinders (7) are situated between the main float (1) and the lateral floats (2).

6. A vehicle according to any one of Claims 1 to 4,
**characterised by** the feature:
- rigid coupling straps (7') are situated between the main float (1) and the lateral floats (2).

7. A vehicle according to Claim 6, **characterised by** the feature:
- the coupling straps (8') have several stages, preferably three.

8. A vehicle according to any one of Claims 1 to 7,
**characterised by** the feature:
releasable hinge couplings (10) are provided between the ramp base (3) and ramp tip (4) .

9. A vehicle according to any one of Claims 1 to 8,
**characterised by** the feature:
- coupling eyes (11) are provided on the outside of the lateral floats (2).

10. A vehicle according to any one of Claims 1 to 9,
**characterised by** the feature:
- only a single folding ramp (3,4) is provided on each lateral float (2).

11. A vehicle according to any one of Claims 1 to 10,
**characterised by** the feature:
- the length of the ramp bases (3) corresponds to the width of the lateral floats (2).

12. A vehicle according to any one of Claims 1 to 11,
**characterised by** the feature:
- the length of the ramp tips (4) corresponds to the width of the main float (1).

## Revendications

1. Véhicule amphibie de franchissement et de transbordement, comprenant essentiellement :
- un flotteur principal automoteur (1),
- deux flotteurs latéraux basculants (2)
- et deux rampes repliables basculantes latéralement, montantes et descendantes hydrauliquement (3, 4) formées chacune par une base de rampe (3) et une extrémité de rampe (4),
dans lequel les ponts (1.1, 2.1) du flotteur principal (1) et des flotteurs latéraux (2) forment, conjointement avec les rampes repliables basculées (3, 4), une chaussée continue et
les rampes repliables (3, 4) sont articulées sur les flotteurs latéraux (2),
**caractérisé en ce que** :
- lorsque la base de rampe (3) est dépliée et l'extrémité de rampe (4) est repliée, l'extrémité de rampe (4) se trouve sur la face supérieure de la base de rampe (3),
- le pont (1.1) du flotteur principal (1) forme une chaussée continue avec les faces inférieures (4.2) de l'extrémité de rampe (4).

2. Véhicule selon la revendication 1, **caractérisé en ce que** :
- les rampes repliables (3, 4) ont une section transversale en forme de coin,
- le pont (2.1) des flotteurs latéraux (2) est chanfreiné de manière complémentaire à celle-ci.

3. Véhicule selon la revendication 1 ou 2, **caractérisé en ce que** :
- des vérins hydrauliques (6) sont placés entre les flotteurs latéraux (2) et la base de rampe (3).

4. Véhicule selon la revendication 1 ou 2, **caractérisé en ce que** :
- des bielles d'attelage rigides (6') sont placées entre les flotteurs latéraux (2) et la base de rampe (3).

5. Véhicule selon l'une quelconque des revendications 1 à 4, **caractérisé en ce que** :
- des vérins hydrauliques (7) sont placés entre le flotteur principal (1) et les flotteurs latéraux (2).

6. Véhicule selon l'une quelconque des revendications 1 à 4, **caractérisé en ce que** :
- des bielles d'attelage rigides (7') sont placées entre le flotteur principal (1) et les flotteurs latéraux (2).

7. Véhicule selon la revendication 6, **caractérisé en ce que** :
- les bielles d'attelage (8') comportent plusieurs, de préférence trois, gradins.

8. Véhicule selon l'une quelconque des revendications 1 à 7, **caractérisé en ce que** :
- des accouplements à charnières détachables (10) sont placés entre la base de rampe (3) et l'extrémité de rampe (4) .

9. Véhicule selon l'une quelconque des revendications 1 à 8, **caractérisé en ce que** :
- des oeillets d'attelage (11) sont placés sur le côté extérieur des flotteurs latéraux (2).

10. Véhicule selon l'une quelconque des revendications 1 à 9, **caractérisé en ce que** :
- une seule rampe repliable (3, 4) est prévue sur chacun des flotteurs latéraux (2).

11. Véhicule selon l'une quelconque des revendications 1 à 10, **caractérisé en ce que** :
- la longueur des bases de rampe (3) coïncide avec la largeur des flotteurs latéraux (2).

12. Véhicule selon l'une quelconque des revendications 1 à 11, **caractérisé en ce que** :
- la longueur des extrémités de rampe (4) correspond à la largeur du flotteur principal (1).
